# EUROPEAN PATENT SPECIFICATION

(11) **EP 2 908 468 B1**
(45) Date of publication and mention of the grant of the patent: **24.02.2016**
(21) Application number: 14187457.8
(22) Date of filing: 02.10.2014
(51) Int. Cl.: H04L 12/24, H04L 12/26, H04L 29/08

(54) **Service level monitoring for geospatial web services**
Dienstebenenüberwachung für geospatiale Webdienste
Surveillance de niveau de service pour des services web géospatiaux

(30) Priority: 13.02.2014 GB 201402537
(43) Date of publication of application: 19.08.2015
(73) Proprietor: Spatineo Oy, 00250 Helsinki (FI)
(72) Inventor: Savolainen, Sampo, 00610 Helsinki (FI)
(74) Representative: Lind, Robert

(56) References cited:
- EP-A1- 2 597 601
- EP-A2- 0 957 432

## Description

### Technical Field

The present invention relates to service level monitoring of geospatial web services.

### Background

"Geospatial web services" are web services that can be used to interface with data that has a geospatial context, i.e. the data is associated with a location in space. This location information may be a single point or a complex shape or area, or may consist of multiple disconnected areas. In other cases, for example where the data is an aerial photograph, the data may consist of a surface of raster information that has a defined mapping between its visual presentation and the corresponding locations in physical space, or, in other words, the data is georeferenced. Well known examples of applications that make use of geospatial web services are web map applications such as Google^{(™)} maps. In the case of a typical geospatial web service, a user accesses the service using a web browser running on a "client" computer. Requests for data are sent from the client's web browser to a hosting server via the Internet, with the requests specifying a location (extent etc) for which data is required.

Geospatial web services are usually created using specialized server software (e.g. GeoServer, MapServer, ESRI ArcGIS) that accesses geospatial data held in databases or files. The software typically understands multiple web service protocols and serves the same data in a similar fashion for all protocols. Proprietary server software typically supports both common standards as well as own protocols.

A web Application Programming interface (API) defines a method with which clients can construct HTTP requests that will instruct a service to execute functionality and return results in a pre-defined format. This allows the client software, be it a browser, desktop software or even server software, to interact with a remote server to access data. These protocols may be used to retrieve or store data on the remote server. Specific API protocols have been created for serving georeferenced data over the Internet. Examples of such APIs include; Web Map Service (WMS), Web Map Tile Service (WMTS), and Web Feature Service (WFS) standardized by the Open Geospatial Consortium (OGC). WMS and WFS have also been published as ISO standards (ISO 19128:2005 and ISO 19142:2010).

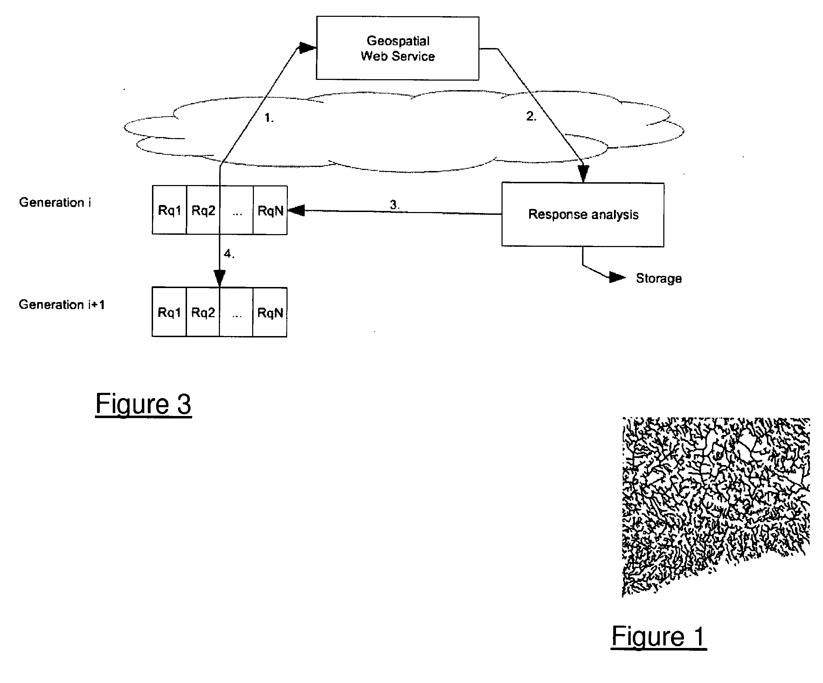

Figure 1 shows an image that is returned to a web browser upon submission of the following WMS request:
http://paikkatieto.ymparisto.fi/arcgis/services/INSPIRE/SYKE_Hydrografia/Map Server/WmsServer?VERSION=1.3.0&SERVICE=WMS&REQUEST=GetMap& LAYERS=Network.WatercourseLink&STYLES=&CRS=EPSG%3A3067&BBOX =312887.1965578748,6639377.6604,562381.7910096803,6888872.25485180 6&WIDTH=256&HEIGHT=256&FORMAT=image%2Fpng&EXCEPTIONS=XML
The geospatial web service in question is provided by the Finnish Environment Institute and it serves hydrographic data maintained by the same institute. The request targets a layer called "Network.WatercourseLink" and the geospatial area of the request is located in southern Finland.

The following is a WFS request:
http://tampere.navici.com/tampere_wfs_geoserver/opendata/wfs?SERVICE=W FS&REQUEST=GetFeature&VERSION=2.0.0&COUNT=3&TYPENAMES=ope ndata%3AWFS_KENTTA_MVIEW&SRSNAME=urn%3Aogc%3Adef%3Acrs%3 AEPSG%3A%3A3878&BBOX=6820008.849586999,2.4481151444220766E7,6 829701.683354436,2.4490844277988203E7
This service in question is maintained by The City of Tampere government and provides information on parks and sports fields provided by the municipality. The data returned in response to the request is in XML format and is not presented here.

Providers of geospatial web services will clearly wish to provide a high level of service to users, as indeed will providers of any web service. Indeed, for some officially run services, a certain minimum service level may be a regulatory requirement. There exist very many tools for achieving this, including tools for monitoring volumes of web service traffic, tools for detecting when a website is down or responding poorly, etc. One such tool is described in US8725855. However, these known tools tend to be relatively static in nature and are not well adapted to geospatial web services that tend to serve highly dynamic data and for which requests can be directed to any of a large number of (geospatial) locations.

EP0957432 discloses a method, system and program product for monitoring, from a client computer system, the performance of an application program residing on a server coputer system.

### Summary

According to a first aspect of the present invention there is provided a method of monitoring the service level provided to clients by a geospatial web service over a network. The method comprises
a) formulating requests (*Rq*) relating to different geospatial locations and/or regions;
b) sending the requests (*Rq*) in sequence to said geospatial web service over said network and receiving respective responses;
c) identifying requests that resulted in responses that include geospatial data for the requested geospatial locations and/or regions;
d) formulating further requests (*Rq*) relating to different geospatial locations and/or regions by evolving at least a proportion of the identified requests; and
e) iteratively repeating steps b) to d) for the further requests.
The method further comprising analysing the responses to determine service level information in respect of the geospatial web service.

The remote monitoring mechanism presented in this invention may adapt to any particular geospatial web service. By using this mechanism it is possible to collect data and generate reports that accurately measure service level, availability and real response time. This adaptability causes the computers/servers that implement the monitoring services to run more efficiently, as the requests evolve and tailor to the specific status of a particular geospatial web service. By way of example, the adaptability of the service may modify the way in which the computer operates by preventing the use of cache results when monitoring dynamic geospatial web services.

Step a) may comprise formulating a set of requests (*Rq*) belonging to a first generation (*i*), and step d) comprises, at each iteration, formulating a set of requests (*Rq*) belonging to a new generation (*i+1*, *i+2*,...), wherein each generation includes the same number of requests. At step d), evolution may comprises using a genetic algorithm. Step d) may further comprise pairing two or more of the identified requests and, for the or each pair, breeding one or more child requests.

At step d), evolution may comprise mutating one or more of the identified requests to generate one or more mutated requests.

Step d) may comprise formulating one or more further requests (*Rq*) by randomly generating geospatial locations and/or regions. Where no requests are identified in step c), all further requests (*Rq*) may be formulated at step d) by randomly generating geospatial locations and/or regions.

The method may comprise, at step d), discarding one or more of said identified requests when the number of identified requests exceeds some predefined threshold, and evolving only the remaining identified requests.

The step of analysing the responses to determine service level information in respect of the geospatial web service may comprise identifying error responses and/or response times.

Step a) may comprise formulating said requests (*Rq*) relating to different geospatial locations and/or regions by randomly generating geospatial locations and/or regions.

If only a single request is identified at step c), a further request may be formulated by randomly generating a geospatial location and/or region, and step d) comprises breeding one or more child requests from said single request and the randomly generated request.

Each said geospatial location and/or region may be defined by one or more rectangular areas defined by the coordinates of their opposite lower and upper corner positions.

Step b) may comprises sending the requests (*Rq*) periodically.

Embodiments of the invention aim to solve the issue of monitoring complex web services in the geospatial domain to maintain their reliability. They are able to robustly monitor such services and provide accurate and true readings of service availability and performance while automatically adapting to changes in the monitored services. They automatically perform a task that would be very labour intensive and error prone to do manually, and for which generic website network monitoring mechanisms provide only very coarse and even faulty data.

### Brief Description of the Drawings

Figure 1 shows image data returned in response to an example WMS request;
Figure 2 illustrates schematically an architecture for monitoring the service levels provided by a geospatial web service;
Figure 3 illustrates schematically a request generation process for use in the architecture of Figure 2;
Figure 4 further illustrates the process of Figure 3;
Figure 5 illustrates an example service level result provided for a given geospatial web service; and
Figure 6 is a flow diagram illustrating a geospatial web service monitoring procedure.

### Detailed Description

The concept of geospatial web services has been introduced above, as has the use of standardised APis to allow users (clients) to interact with geospatial web services. Such APIs provide users and application developers with an on-line service which processes geospatial data retained in the service on-demand. Results may be returned, for example, either as graphical cartographic representations of data (e.g. Figure 1) or machine readable data (e.g. XML). For such services to be of benefit to end users and application developers, the services must be robust and dependable. Monitoring may also be required by virtue of regulation (e.g. the EU directive, INSPIRE, which mandates member countries to publish data using such APIs and requires these services to meet certain quality standards regarding their service level, performance and response time). A mechanism is proposed here for monitoring geospatial web services in a networked environment. More particularly, the proposed mechanism combines automated discovery, regular polling, response analysis, evolutionary algorithms and simulating user behaviour, to reliably and remotely assess service levels. By using this mechanism it is possible to collect data and generate reports that accurately measure service level, availability and real response time.

It is assumed that each geospatial web service provider makes available the following information: i) a description of the service's capabilities (supported API operations, supported output formats and transport protocols) and contents (enumeration of available datasets and their geospatial properties, such as data bounding box and supported coordinate reference systems), and ii) an API operation to retrieve geospatial data from one or more datasets within a geospatially restricted area. This is certainly true of WMS, WMTS, and WFS.

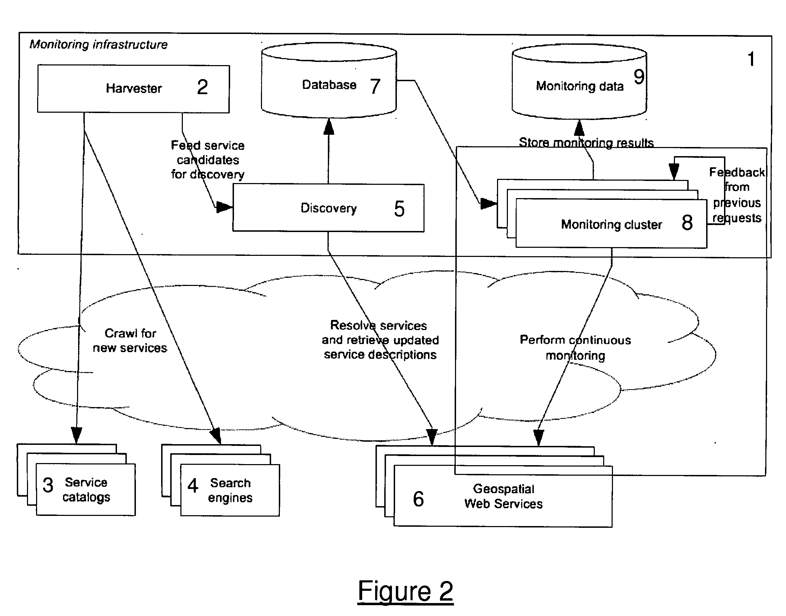

Figure 2 illustrates schematically a network diagram illustrating various components involved in monitoring the service levels of a number of geospatial web services. By way of background, the service may be implemented by a commercial operator which identifies currently available geospatial web services and accepts subscriptions from the operators of geospatial web services. The commercial operation typically owns and operates the components contained within the box identified by reference numeral 1. These components include a Harvester 2 that is responsible for crawling the web to identify new services, e.g. by looking at service catalogues 3 and search engines 4, and a Discovery entity 5 that receives from the Harvester 2 details of geospatial web services to be monitored. The Harvester may be responsible for identifying the API used by a given geospatial web service. The Discovery entity is responsible for confirming the availability of identified geospatial web services, e.g, by sending a one-off request to a newly identified geospatial web service 6. Once the availability of a (newly identified) geospatial web service has been confirmed, the Discovery entity adds the service to a database 7 together with the corresponding API (e.g. WMS, WMTS, or WFS), which maintains a record of available and monitored geospatial web services. Such automated discovery means that the commercial operator can leverage online search engines and service catalogs to actively look for APIs to be monitored.

Within the operator's domain 1 there is further provided a Monitoring cluster 8 and a database 9 storing monitoring data. The functionality of the monitoring cluster 8 (typically implemented using one or more servers) will be described in more detail bellow, but at a very general level it is responsible for sending regular requests to geospatial web services being monitored, analysing results, and saving result data into the datbase 9. Typically, for each monitored geospatial web service, a "meter" is specified. This meter specifies which properties of the service are to be monitored. The meter includes one or more variable parameters (i.e. parameters that vary between requests) and possibly one or more static parameters that do not vary. The meter may be generated automatically by the Monitoring cluster 8. If later changes to the service description of a given geospatial web service invalidates previous meters, a new meter may be automatically formed: the system ensures that the monitoring adapts to changes to the service description and always collects information about the service's service level.

Each request that is generated and sent by the Monitoring cluster 8, requests data from a geospatial web service according to the specified API and the defined meter.

Requests are preferably, though not necessarily, sent at a fixed rate by the monitoring cluster, with the rate being selected to provide a sufficiently high resolution (in time) to measure service uptime without causing excessive load on the service being monitored. For example, a request rate of one request every 5 minutes may be appropriate.

To truly measure how well a geospatial web service performs, one should seek to make the sort of requests that a real user would make. Moreover, it is important that the monitoring requests are not static but instead vary. This is key, as not varying the request area would skew the results, both with respect to response time and service availability, for the following reasons:
- Geospatial web services may process and return varying amounts of data dependent on the request area and the area resolution. No single request on its own can therefore be representative of service response time. In particular:
   0 The service may not return data for all resolutions / areas;
   1 The amount of data processing might vary depending on the resolution / area;
   2 The actual data source(s) used may depend on resolution / area;
   3 The dataset may contain data only in some parts within the reported geospatial bounding box.
- Using fixed requests will give services the opportunity to cache results. This would mean that monitoring could reflect the response time and availability of the caching service instead of the actual geospatial web service.
- Underlying data served by a geospatial web service might change without warning, meaning that the amount of data processing for a fixed request area might change significantly.

To deal with these issues the mechanism proposed here seeks to create a unique monitoring request for each geospatial web service request that is sent. Requests are "evolved" by feeding-back analysis results of previous requests. A preferred approach to this evolution involves the use of a genetic algorithm that attempts to mimick the process of natural selection. This method guarantees both varying requests and steers the monitoring so as to focus on geospatial areas for which a service returns data. This approach also automatically adapts to changes in how the geospatial web service serves data for a particular meter.

The evolution of requests is guided by an analysis of the data returned in response to previous requests. For a given geospatial web service, each response is judged to be "error", "good" or "empty". Network errors, timeouts and responses that do not adhere to the API in question are considered "errors", otherwise:
- For services which provide data in machine readable form (for example WFS), the data is parsed and the request is determined "empty" if no data entities (or "features" according to WFS parlance) were returned by the service. Otherwise results are considered to be "good".
- For services that return images (for example WMS and WMTS), the image is analyzed for content using the following algorithm:
   1. Divide the image into equally sized sections;
   2. Calculate the variance of pixel values within each section;
   3. Compare the number of sections with at least some variance to a threshold. If the threshold is crossed, the image is "good", otherwise the image is considered to be blank or to contain nothing more than a watermark, and is classed as "empty".
It is noted that it may be unwise to make approximations on how much more data there is within one geospatial area compared to another and to use such information to steer the request generation process. While it is possible to make reasonable approximations on which result contained more complexity, attempting to focus requests on more densely populated areas of the data set is not a realistic goal for monitoring.

Although successive requests are always spaced in time, requests are created and sent in batches, or generations, i.e. a given sequence of requests belongs to a given generation, the next sequence of requests belongs to the next generation, and so on. Each generation is created via a feedback process using the requests of the previous generation that resulted in "good" responses, i.e. the "survivors". Generations are formed using evolutionary genetic algorithms, where the variable parameters within a given metric can be thought of as the "genes". In this process, at least a proportion of new requests are obtained from survivors by breeding (combining survivor genes) and by introducing mutations into the survivors. Breeding and mutation algorithms are fine tuned for each geospatial web service type. Some random requests are also entered into the generation mechanism.

Some of the requests will inevitably land on areas for which no data is returned. These requests are not detrimental to the monitoring results *per se*, as real users of a service will sometimes load data from unpopulated geospatial areas. Requesting empty areas in addition to focusing on areas with data only makes the monitoring more realistic. However, requests for which no data is returned are not used to generate the next generation of requests.

Figure 3 illustrates schematically a process for evolving request generations. By way of example it is assumed that each request contains three parameters that define a location of interest, namely size, positionX, and positionY. These parameters are defined further in Table 1 below. The parameters are defined such that all possible combinations of values produce legal bounding boxes that are within the dataset bounding box. A first generation of (N=16) requests is obtained by random generation of parameters for each request, within the specified value range for each parameter. The process then continues in an iterative manner as follows:
1. Requests from the current generation *i* are sent one by one to the monitored web service at a fixed rate;
2. Responses to the requests are analyzed (and stored);
3. When the requests of generation *i* have all been sent, the next generation, *i + 1*, is created as follows,
   i. Discard requests from generation *i* that resulted in responses classified as "error" or "empty".
   ii. Remove survivors if there are more than the maximum number left (50% of the generation size).
   iii. If there is only one survivor left, create a random mate.
   iv. Breed random survivor couples to generate c children (c = 80% of ([generation size] - [amount of survivors]) rounded).
   v. For each survivor apply a 95% probability to determine if the survivor should be mutated (some good requests are not mutated and are resent to ensure viability of the generation). In other words, over multiple generations, on average 95% of survivors will be mutated and 5% will be retained un-mutated.
   vi. Create *r* random requests (*r* = [generation size] - [amount of survivors] - c). NB If there were no survivors from generation *i*, all requests for generation *i + 1* are randomly generated.
   vii. Create the new generation from remaining survivors, children and the random requests in random order.

Considering in more detail step 3.iv., each breeding process comprises the random selection of two survivors. Each parameter value for the child is selected to lie between the corresponding parameter values of its' parents. For example, if the two parents' have parameter values of 0.2 and 0.3, then the parameter value (S) for the child is 0.2 < S < 0.3. The algorithm is tuned so that there is a higher probability for values close to one of the parents, rather than for values which are in the middle of the range. Each parameter for the child is chosen separately, i.e. there is no correlation between the selection procedures for different parameters.

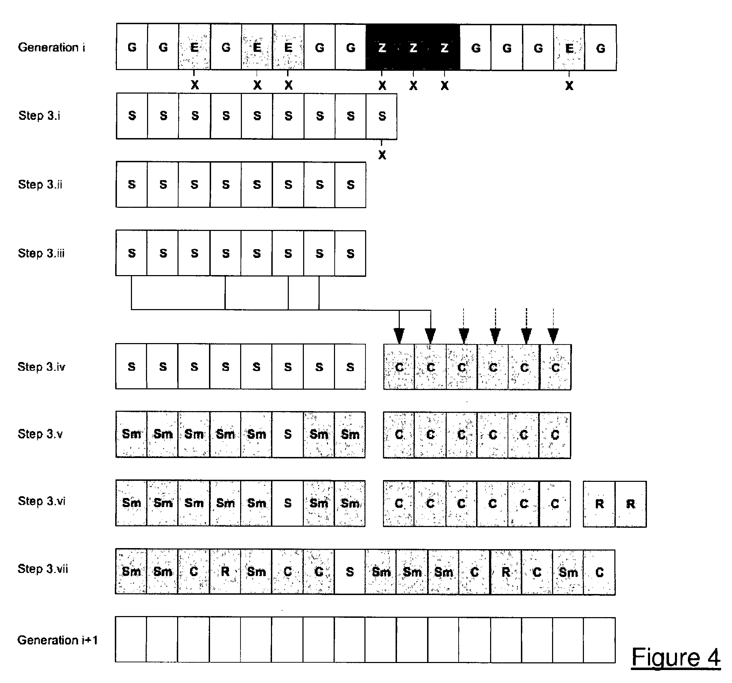

Figure 4 further illustrates this process, assuming 16 requests per generation. For completed Generation *i*, of the 16 sent requests, 3 resulted in errors (Z), and a further 4 resulted in empty responses (E), leaving nine good responses (G). Performing step 3i results in nine survivors (S). Step 3ii causes a further one survivor to be discarded to reduce the remaining number to eight. Step 3iii is skipped, and step 3iv causes those eight survivors to be bred to generate six children (C). At step v, seven (or possibly more or fewer depending upon the 95% probability) of the eight survivors are mutated, resulting in seven mutated survivors (Sm), one unmutated survivor (S), and six children (C). To complete the generation, a further two requests (R) are randomly generated at step 3vi. These random requests are included in order to deal with the problem of local maximums which might otherwise cause the requests of successive generations to cluster around a given local maximum. At step 3vii, the mutated survivors (8), children (6), and random requests (2) are combined in a random order to provide a generation *i + 1* of sixteen requests. After these requests have been sent, the process is repeated to generate a further sixteen requests.

The following data is stored for each monitoring request:
- Which meter the request relates to (service id and parameters);
- The request itself;
- When the request was initiated (millisecond precision);
- Response time:
   - How much time it took to receive server HTTP headers (millisecond precision),
   - How much time it took to read the complete response (millisecond precision),
- How many bytes of data were received;
- HTTP status code;
- Response analysis result;
- Which measurement node executed the request.

From this data, customers of the commercial operator can be provided with, for example, service availability analysis, timelines showing trends in response time and availability, and automated alerts when service levels fall below set thresholds.

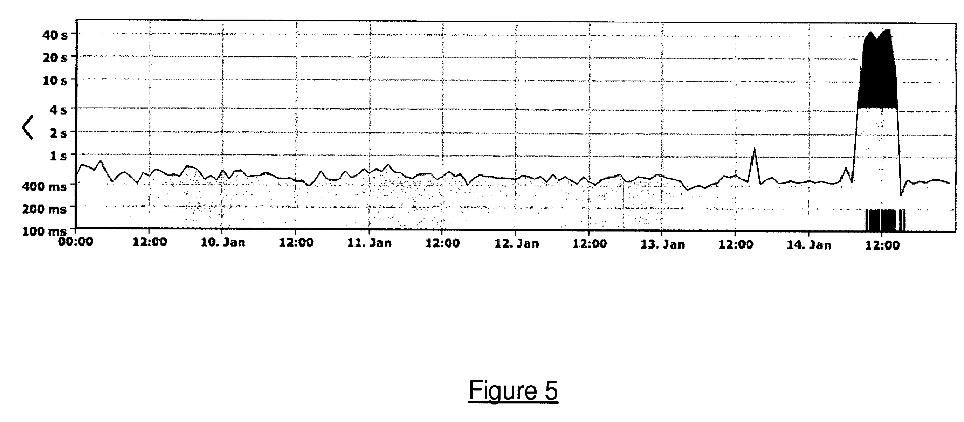

Figure 5 illustrates a timeline of response times overlaid by markers on the bottom of the graph which show times when the service has not been able to respond correctly (responses in *error*)*.*

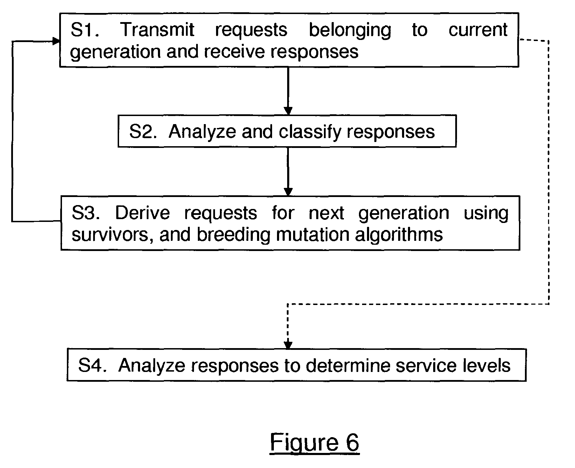

Figure 6 is a flow diagram illustrating the method described above. At step S1, requests from the current generation are transmitted towards the monitored geospatial web service, and responses received at step S2. The responses are analyzed, and requests for the next generation derived at step S3. The process flow returns to step S1. Responses received at step S1 are also handled at step S4 in order to provide an ongoing analysis of service levels.

It will be appreciated by the person of skill in the art that various modifications may be made to the above described embodiments without departing from the scope of the present invention.

**Table 1**

| **Parameter** | **Definition** | **Value range** |
|---|---|---|
| *size* | Size of request area relative to the area advertised the service for the dataset. The size defines a square area where the length (in projection units) of each edge is: | 0 < size < 1 |
| | | |
| | ( [narrower axis max] - [narrower axis min] ) * size | |
| *positionX* | Offset of request area on the first axis of the dataset. 0 means the request area starts at the minimum value of the dataset bounding box. 1 means the request area ends at the maximum value of the dataset bounding box. | 0 <= positionX <= 1 |
| *positionY* | As above but for the second axis. | 0 <= positionY <= 1 |

## Claims

1. A method of monitoring the service level provided to clients by a geospatial web service over a network, the method **characterised by**:
a) formulating requests (*Rq*) relating to different geospatial locations and/or regions;
b) sending the requests (*Rq*) in sequence to said geospatial web service over said network and receiving respective responses;
c) identifying requests that resulted in responses that include geospatial data for the requested geospatial locations and/or regions;
d) formulating further requests (*Rq*) relating to different geospatial locations and/or regions by evolving at least a proportion of the identified requests;
e) iteratively repeating steps b) to d) for the further requests,
the method further comprising analysing the responses to determine service level information in respect of the geospatial web service.

2. A method according to claim 1, wherein step a) comprises formulating a set of requests (*Rq*) belonging to a first generation (*i*), and step d) comprises, at each iteration, formulating a set of requests (*Rq*) belonging to a new generation (*i+1*, *i+2*,...).

3. A method according to claim 2, wherein each generation includes the same number of requests.

4. A method according to claim 2 or 3, wherein, at step d), evolution comprises using a genetic algorithm.

5. A method according to claim 4, wherein step d) comprises pairing two or more of the identified requests and, for the or each pair, breeding one or more child requests.

6. A method according to any one of the preceding claims, wherein, at step d), evolution comprises mutating one or more of the identified requests to generate one or more mutated requests.

7. A method according to any one of the preceding claims, wherein step d) comprises formulating one or more further requests (*Rq*) by randomly generating geospatial locations and/or regions.

8. A method according to claim 7, wherein, where no requests are identified in step c), all further requests (*Rq*) are formulated at step d) by randomly generating geospatial locations and/or regions.

9. A method according to any one of the preceding claims and comprising, at step d), discarding one or more of said identified requests when the number of identified requests exceeds some predefined threshold, and evolving only the remaining identified requests.

10. A method according to any one of the preceding claims, wherein said step of analysing the responses to determine service level information in respect of the geospatial web service comprises identifying error responses and/or response times.

11. A method according to any one of the preceding claims, wherein step a) comprises formulating said requests (*Rq*) relating to different geospatial locations and/or regions by randomly generating geospatial locations and/or regions.

12. A method according to any one of the preceding claims, wherein, if only a single request is identified at step c), a further request is formulated by randomly generating a geospatial location and/or region, and step d) comprises breeding one or more child requests from said single request and the randomly generated request.

13. A method according to any one of the preceding claims, wherein each said geospatial location and/or region is/are defined by one or more rectangular areas defined by the coordinates of their opposite lower and upper corner positions.

14. A method according to any one of the preceding claims, wherein step b) comprises sending the requests (*Rq*) periodically.

## Patentansprüche

1. Verfahren zum Überwachen des Dienstniveaus, das Clients durch einen Geoinformations-Webdienst über ein Netzwerk bereitgestellt wird, wobei das Verfahren **gekennzeichnet ist durch**:
a) Formulieren von Anfragen (*Rq*) bezüglich unterschiedlicher Geoinformationsorte und/oder -regionen;
b) der Reihe nach erfolgendes Senden der Anfragen (*Rq*) an den Geoinformations-Webdienst über das Netzwerk und Empfangen entsprechender Antworten;
c) Identifizieren von Anfragen, die zu Antworten führten, die Geoinformationsdaten für die angefragten Geoinformationsorte und/oder -regionen einschließen;
d) Formulieren weiterer Anfragen (*Rq*) bezüglich unterschiedlicher Geoinformationsorte und/oder -regionen **durch** Entwickeln zumindest eines Anteils der identifizierten Anfragen;
e) iteratives Wiederholen der Schritte b) bis d) für die weiteren Anfragen,
wobei das Verfahren ferner umfasst: Analysieren der Antworten, um Dienstniveauinformation im Hinblick auf den Geoinformations-Webdienst zu bestimmen.

2. Verfahren nach Anspruch 1, worin Schritt a) umfasst: Formulieren einer Menge von Anfragen (*Rq*), die zu einer ersten Generation (*i*) gehören, und Schritt d) umfasst: in jeder Iteration erfolgendes Formulieren einer Menge von Anfragen (*Rq*), die zu einer neuen Generation (*i*+1, *i*+2, ...) gehören.

3. Verfahren nach Anspruch 2, worin jede Generation die gleiche Anzahl von Anfragen einschließt.

4. Verfahren nach Anspruch 2 oder 3, worin in Schritt d) das Entwickeln umfasst: Verwenden eines genetischen Algorithmus.

5. Verfahren nach Anspruch 4, worin Schritt d) umfasst: Paaren von zwei oder mehr der identifizierten Anfragen und für das oder jedes Paar erfolgendes Hervorbringen von einer oder mehreren Kind-Abfragen.

6. Verfahren nach einem der vorhergehenden Ansprüche, worin in Schritt d) das Entwickeln umfasst: Mutieren einer oder mehrerer der identifizierten Anfragen, um eine oder mehrere mutierte Anfragen zu erzeugen.

7. Verfahren nach einem der vorhergehenden Ansprüche, worin Schritt d) umfasst: Formulieren einer oder mehrerer weiterer Anfragen (*Rq*) durch zufälliges Erzeugen von Geoinformationsorten und/oder -regionen.

8. Verfahren nach Anspruch 7, worin, wenn in Schritt c) keine Anfragen identifiziert werden, alle weiteren Anfragen (*Rq*) in Schritt d) durch zufälliges Erzeugen von Geoinformationsorten und/oder -regionen erzeugt werden.

9. Verfahren nach einem der vorhergehenden Ansprüche und umfassend: in Schritt d) erfolgendes Verwerfen einer oder mehrerer der identifizierten Anfragen, wenn die Anzahl der identifizierten Anfragen einen vordefinierten Schwellwert überschreitet, und Entwickeln nur der verbleibenden identifizierten Anfragen.

10. Verfahren nach einem der vorhergehenden Ansprüche, worin der Schritt des Analysierens der Antworten, um Dienstniveauinformation im Hinblick auf den Geoinformations-Webdienst zu bestimmen, umfasst: Identifizieren von Fehlerantworten und/oder Antwortzeiten.

11. Verfahren nach einem der vorhergehenden Ansprüche, worin Schritt a) umfasst: Formulieren der Anfragen (*Rq*) bezüglich unterschiedlicher Geoinformationsorte und/oder -regionen durch zufälliges Erzeugen von Geoinformationsorten und/oder -regionen.

12. Verfahren nach einem der vorhergehenden Ansprüche, worin, wenn in Schritt c) nur eine einzelne Anfrage identifiziert wird, eine weitere Anfrage durch zufälliges Erzeugen eines Geoinformationsorts und/oder einer -region formuliert wird und Schritt d) umfasst: Hervorbringen von einer oder mehreren Kind-Abfragen aus der einzelnen Anfrage und der zufällig erzeugten Anfrage.

13. Verfahren nach einem der vorhergehenden Ansprüche, worin jede(r) besagte Geoinformationsort und/oder -region durch eine oder mehrere rechteckige Flächen definiert ist/sind, die durch die Koordinaten ihrer gegenüberliegenden unteren und oberen Eckpositionen definiert sind.

14. Verfahren nach einem der vorhergehenden Ansprüche, worin Schritt b) umfasst: periodisches Senden der Anfragen (*Rq*).

## Revendications

1. Procédé de surveillance du niveau de service fourni à des dispositifs clients par un service web géospatial sur un réseau, le procédé étant **caractérisé par** les étapes ci-dessous consistant à :
a) formuler des demandes (*Rq*) connexes à différents emplacements géospatiaux et/ou différentes zones géospatiales ;
b) envoyer les demandes (*Rq*) en séquence audit service web géospatial sur ledit réseau, et recevoir des réponses respectives ;
c) identifier des demandes qui ont abouti à des réponses qui incluent des données géospatiales pour les emplacements géospatiaux et/ou zones géospatiales demandé(e)s ;
d) formuler des demandes supplémentaires (*Rq*) connexes à différents emplacements géospatiaux et/ou différentes zones géospatiales en modifiant au moins une proportion des demandes identifiées ;
e) répéter itérativement les étapes b) à d) pour les demandes supplémentaires ;
le procédé comprenant en outre l'étape consistant à analyser les réponses en vue de déterminer des informations de niveau de service à l'égard du service web géospatial.

2. Procédé selon la revendication 1, dans lequel l'étape a) consiste à formuler un ensemble de demandes (*Rq*) appartenant à une première génération (*i*), et l'étape d) consiste, à chaque itération, à formuler un ensemble de demandes (*Rq*) appartenant à une nouvelle génération (*i*+*1*, *i*+*2*, ...).

3. Procédé selon la revendication 2, dans lequel chaque génération inclut le même nombre de demandes.

4. Procédé selon la revendication 2 ou 3, dans lequel, à l'étape d), la modification consiste à utiliser un algorithme génétique.

5. Procédé selon la revendication 4, dans lequel l'étape d) consiste à jumeler deux des demandes identifiées ou plus et, pour la ou chaque paire, à générer une ou plusieurs demandes enfant.

6. Procédé selon l'une quelconque des revendications précédentes, dans lequel, à l'étape d), la modification consiste à muter une ou plusieurs des demandes identifiées en vue de générer une ou plusieurs demandes mutées.

7. Procédé selon l'une quelconque des revendications précédentes, dans lequel l'étape d) consiste à formuler une ou plusieurs demandes supplémentaires (*Rq*) en générant de façon aléatoire des emplacements géospatiaux et/ou des zones géospatiales.

8. Procédé selon la revendication 7, dans lequel, lorsqu'aucune demande n'est identifiée à l'étape c), toutes les demandes supplémentaires (*Rq*) sont formulées à l'étape d) en générant de façon aléatoire des emplacements géospatiaux et/ou des zones géospatiales.

9. Procédé selon l'une quelconque des revendications précédentes, consistant, à l'étape d), à rejeter une ou plusieurs desdites demandes identifiées lorsque le nombre de demandes identifiées est supérieur à un seuil prédéfini donné, et à modifier uniquement les demandes identifiées restantes.

10. Procédé selon l'une quelconque des revendications précédentes, dans lequel ladite étape d'analyse des réponses en vue de déterminer des informations de niveau de service à l'égard du service web géospatial consiste à identifier des réponses d'erreur et/ou des temps de réponse.

11. Procédé selon l'une quelconque des revendications précédentes, dans lequel l'étape a) consiste à formuler lesdites demandes (*Rq*) connexes à différents emplacements géospatiaux et/ou différentes zones géospatiales en générant de façon aléatoire des emplacements géospatiaux et/ou des zones géospatiales.

12. Procédé selon l'une quelconque des revendications précédentes, dans lequel, si seule une demande unique est identifiée à l'étape c), une demande supplémentaire est formulée en générant de façon aléatoire un emplacement géospatial et/ou une zone géospatiale, et l'étape d) consiste à générer une ou plusieurs demandes enfant à partir de ladite demande unique et de la demande générée de façon aléatoire.

13. Procédé selon l'une quelconque des revendications précédentes, dans lequel chaque dit emplacement géospatial et/ou chaque dite zone géospatiale est/sont défini(e)s par une ou plusieurs surfaces rectangulaires définies par les coordonnées de leurs positions d'angles inférieur et supérieur opposées.

14. Procédé selon l'une quelconque des revendications précédentes, dans lequel l'étape b) consiste à envoyer les demandes (*Rq*) périodiquement.
